Europäisches Patentamt

European Patent Office

Office européen des brevets

(11) Veröffentlichungsnummer: **0 175 189 B1**

# EUROPÄISCHE PATENTSCHRIFT

(45) Veröffentlichungstag der Patentschrift: **27.11.91**

(51) Int. Cl.⁵: **C09K 3/10, C09D 5/34**

(21) Anmeldenummer: **85110931.4**

(22) Anmeldetag: **30.08.85**

(54) **Lichthärtbare Verschlussmasse, insbesondere zum Verschliessen des Spaltes zwischen den Enden von auf Formzylinder aufgespannten Tiefdruckplatten.**

(30) Priorität: **08.09.84 DE 3433045**

(43) Veröffentlichungstag der Anmeldung:
**26.03.86 Patentblatt 86/13**

(45) Bekanntmachung des Hinweises auf die
Patenterteilung:
**27.11.91 Patentblatt 91/48**

(84) Benannte Vertragsstaaten:
**AT BE CH DE FR GB IT LI NL SE**

(56) Entgegenhaltungen:
**DE-A- 3 332 064**
**FR-A- 2 514 849**

(73) Patentinhaber: **BASF Aktiengesellschaft**
**Carl-Bosch-Strasse 38**
**W-6700 Ludwigshafen(DE)**

(72) Erfinder: **Lynch, John, Dr.**
**Bacchusstrasse 5**
**W-6521 Monsheim(DE)**

**Beschreibung**

Die Erfindung betrifft eine lichthärtbare Verschlußmasse für den toluol- oder benzinfesten Spaltverschluß, insbesondere zum Verschließen eines Spaltes zwischen den End- oder Randbereichen von auf Formzylindern einer Bogen- oder Rollen-Rotationstiefdruckmaschine aufgespannten Tiefdruckplatten. Die lichthärtbare Verschlußmasse eignet sich besonders zum Verschließen derartiger Spalte bei auf Formzylinder aufgespannten Tiefdruckplatten mit einer Kunststoff-Druckschicht.

Es ist bekannt, für den Rotationstiefdruck Druckplatten aus einem dimensionsstabilen und biegsamen Träger mit einer darauf aufgebrachten Druckschicht magnetisch oder vorzugsweise mechanisch mittels geeigneter Halte- und Spannelemente auf einen Tiefdruckformzylinder aufzuspannen. Hierbei können mehrere Druckplatten hinter- und auch nebeneinander auf der Oberfläche des Formzylinders befestigt werden. Bedeutungsvoll, insbesondere für den Rollenrotationstiefdruck, ist jedoch der Einsatz von Tiefdruckwickelplatten, bei denen zum Aufspannen auf den Formzylinder im allgemeinen ein oder beide Enden umgekantet und unter Spannen der Platte in eine parallel oder auch schräg zur Formzylinderachse verlaufende Nut eingehängt werden. Wegen der einfachen Herstellung sind dabei Tiefdruckplatten, einschließlich Tiefdruckwickelplatten, von besonderem Interesse, die auf einem dimensionsstabilen Träger eine Kunststoff-Druckschicht aufgebracht enthalten.

Beim Aufspannen der Tiefdruckplatten auf den Formzylinder ergibt sich zwischen den Enden der Tiefdruckplatten, und wenn mehrere Tiefdruckplatten auf dem Formzylinder nebeneinander angeordnet sind, auch zwischen den aneinanderstoßenden Seitenkanten der Platten, eine Unterbrechung der Druckfläche in Form eines schmalen Spaltes oder Spannschlitzes. Dieser Spalt muß für das Tiefdruckverfahren mit einer geeigneten Verschlußmasse verschlossen werden, um ein Eindringen der Druckfarbe in den Spalt zu vermeiden und einen ruhigen Rakellauf zu gewährleisten.

Es ist schon vorgeschlagen worden, diesen Spalt durch Einlegen oder Einklemmen einer elastischen Dichtungsleiste oder eines Kunststoffbandes auszufüllen bzw. den Spalt mit einem thermoplastischen oder thermisch verschweißbaren Kunststoff zu verschließen. In der DE-A-25 45 618 wird eine Methode zum Spaltverschluß bei aufgespannten Tiefdruckplatten beschrieben, bei dem in den Spalt ein in der Wärme schnell aushärtendes Zweikomponenten-Gemisch, insbesondere ein Epoxid-, Polyester- oder Acrylharz-Gemisch, eingebracht wird. Des weiteren ist auch schon vorgeschlagen worden, den Spalt zwischen den Endbereichen von auf Formzylinder aufgespannten Tiefdruckplatten mit lichthärtbaren Methacryl- oder Cyanacrylharzen zu füllen und diese dann über eine UV-Licht initiierte Polymerisation auszuhärten (vgl. Deutscher Drucker, Nr. 41 (1975), Seiten 17 bis 22).

In der DE-A-3 332 064 werden unter Sauerstoffausschluß härtende Dichtmassen beschrieben, die aus einer flüssigen, polymerisierbaren Monomerenkomponente, aus einer permanent klebrigen Masse und einer Quelle für freie Radikale, die unter den Bedingungen der Erzeugung der Abdichtung die Polymerisation der Monomeren initiiert, bestehen, wobei die reaktiven Dichtmassen im ausgehärteten Zustand Permanent-Klebrigkeit und elastisch-plastische Eigenschaften aufweisen. Derartige Dichtmassen sind zur Lösung der Aufgabe der vorliegenden Erfindung ungeeignet.

Alle bislang für den Spaltverschluß vorgeschlagenen Materialien konnten jedoch in der praktischen Anwendung noch nicht vollständig befriedigen. Entweder ist die Handhabung der Verschlußmaterialien schwierig, oder sie besitzen nicht die notwendigen mechanischen und chemischen Eigenschaften, wie beispielsweise hinreichende Beständigkeit gegenüber den Druckfarben-Lösungsmitteln oder der Rakelbeanspruchung. Teilweise neigen die bekannten Verschlußmaterialien leicht zum Verspröden, so daß sich nach kurzer Zeit im Spaltbereich feine Risse bilden, die sich mit Farbe füllen können und den Druck stören, oder diese Verschlußmassen zeigen auch eine ungenügende Haftfestigkeit, so daß es passieren kann, daß der Spaltverschluß während des Druckens ganz oder teilweise wieder aufreißt. Die in der DE-A-25 45 618 beschriebenen wärmehärtbaren Zweikomponenten-Gemische haben den Nachteil, daß sie entweder lange Aushärtezeiten erfordern oder daß bei Einsatz von reaktiven Zweikomponenten-Gemischen, zur Verkürzung der Aushärtezeit, die zugehörigen Topfzeiten so kurz werden, daß sie für die Verarbeitung nicht mehr ausreichen. Der Einsatz von lichthärtbaren Methacryl- oder Cyanacrylharzen, wie er in der oben zitierten Literaturstelle "Deutscher Drucker" beschrieben wird, ist nicht nur von der Handhabung dieser Harze her problematisch, sondern auch hier ist der so verschlossene Spalt gegenüber den Beanspruchungen im Druckverfahren nicht hinreichend stabil. Diese bekannten, lichthärtbaren Verschlußmaterialien haben sich dabei vor allem als sehr spröde erwiesen und sind in ihrer Haftfestigkeit, insbesondere bei Einsatz von Tiefdruckplatten mit Kunststoff-Druckschichten, unbefriedigend. Trotz der vielfältigen Versuche, das Problem des Spaltverschlusses bei auf Formzylindern aufgespannten Tiefdruckplatten zu lösen, besteht in der Praxis nach wie vor der Bedarf an einer geeigneten Verschlußmasse für diesen Spaltverschluß.

Aufgabe der vorliegenden Erfindung ist es demzufolge, eine geeignete Verschlußmasse für den Spaltverschluß der sich beim Aufspannen von Tiefdruckplatten auf Formzylinder ergebenden Spalte in der Druckfläche aufzuzeigen, die den von der Praxis her gestellten Anforderungen genügt. Die Verschlußmasse soll insbesondere leicht handhabbar und verarbeitbar sein, sie soll nach dem Verschließen des Spaltes eine gute Haftung gegenüber der Tiefdruckplatte aufweisen, so daß die Enden der Tiefdruckplatten hierdurch fest und dauerhaft miteinander verbunden werden; der mit der Verschlußmasse hergestellte Spaltverschluß soll gegenüber den beim Tiefdruck üblicherweise verwendeten toluol- oder benzinhaltigen, aber auch keton- oder esterhaltigen Lösungsmitteln für die Druckfarben beständig sein und eine hohe mechanische Festigkeit sowie Beständigkeit gegenüber der Belastung durch die Rakel aufweisen.

Es wurde nun überraschenderweise gefunden, daß diese Aufgabe gelöst wird, wenn die Verschlußmasse aus einem homogenen, bei Raumtemperatur fließfähigen, lösungsmittelfreien, photopolymerisierbaren Gemisch aus mindestens einer hydrophilen, polaren, photopolymerisierbaren ethylenisch ungesättigten niedermolekularen Verbindung, mindestens einem damit verträglichen, gegenüber den Druckfarbenlösungsmitteln beständigen polymeren Bindemittel, mindestens einem Photoinitiator sowie gegebenenfalls weiteren Zusatz- und/oder Hilfsstoffen besteht.

Gegenstand der Erfindung ist demzufolge eine lichthärtbare Verschlußmasse zum Verschließen der Spalte, die sich beim Aufspannen von Tiefdruckplatten auf Formzylinder zwischen den End- oder Randbereichen der Tiefdruckplatten ergeben, welche dadurch gekennzeichnet ist, daß die Verschlußmasse aus einem homogenen, bei Raumtemperatur fließfähigen, weniger als 10 Gew.% an bei Raumtemperatur leicht flüchtigen, flüssigen, nicht polymerisierbaren Verbindungen enthaltenden, photopolymerisierbaren Gemisch besteht von

(a) 10 bis 90 Gew.% mindestens einer hydrophilen, polaren, photopolymerisierbaren, ethylenisch ungesättigten niedermolekularen Verbindung aus der Gruppe N-Vinylmonomere, (Meth)acrylsäure, Hydroxyalkyl(meth)acrylate, (Meth)acrylamid und/oder Derivate von (Meth)acrylamid,

(b) 5 bis 65 Gew.% mindestens eines gegenüber toluol-, benzin-, keton- und/oder esterhaltigen Lösungsmitteln beständigen, polymeren Bindemittels, das mit den photopolymerisierbaren niedermolekularen Verbindungen der Komponente (a) verträglich ist und mit diesen eine homogene Lösung oder Dispersion bildet,

(c) 0,01 bis 10 Gew.% mindestens eines Photopolymerisations-Initiators sowie

(d) 0 bis 70 Gew.% an weiteren Zusatz- und/oder Hilfsstoffen,

mit der Maßgabe, daß als polymeres Bindemittel (b) ein Styrol/Maleinsäurehalbester-Copolymerisat oder ein lineares, synthetisches lösliches Copolyamid, das durch Mischkondensation eines Gemisches aus einem oder mehreren Lactamen mit mindestens einem Dicarbonsäure/Diamin-Salz hergestellt worden ist, eingesetzt wird, und wobei sich die angegebenen Gewichtsprozente stets auf das gesamte Verschlußmassen-Gemisch beziehen.

Die erfindungsgemäßen Verschlußmassen für den Spaltverschluß bei aufgespannten Tiefdruckplatten sind nicht nur einfach und leicht zu handhaben und problemlos in der Anwendung, sondern liefern nach Füllen des Spaltes und Aushärten der Verschlußmassen durch Bestrahlen mit aktinischem Licht einen Spaltverschluß, der den von der Praxis her gestellten Anforderungen, insbesondere bezüglich Haftfestigkeit und mechanischen Eigenschaften, wie Härte, Zähigkeit und Abriebfestigkeit, genügt. Man erhält so nicht nur einen im Vergleich zum Stand der Technik besseren, dauerhaften und widerstandsfähigen Spaltverschluß mit im allgemeinen glatter und nicht-klebriger Oberfläche, sondern es ist gleichzeitig auch noch möglich, in den Bereichen der verschlossenen Spalte farbaufnehmende Vertiefungen für das Druckbild einzubringen, was insbesondere für den Rollendruck von Bedeutung ist.

Als Komponente (a) der erfindungsgemäßen Verschlußmassen kommen die hydrophilen, polaren, photopolymerisierbaren Monomeren in Betracht, wie sie als solche bekannt sind. Insbesondere bevorzugt sind solche Monomeren, deren photopolymerisierbare ethylenische Doppelbindungen durch Konjugation oder Nachbarschaftsstellung zu O-, N- oder S-Atomen aktiviert sind. Die erfindungsgemäß einzusetzenden photopolymerisierbaren, ethylenisch ungesättigten niedermolekularen Verbindungen können sowohl monofunktionell als auch mehrfunktionell sein, d.h. sie können eine oder mehrere photopolymerisierbare, ethylenische Doppelbindungen im Molekül enthalten. Überraschenderweise hat sich gezeigt, daß man zu einem sehr guten, dauerhaften und widerstandsfähigen Spaltverschluß kommt, wenn die erfindungsgemäßen Verschlußmassen überwiegend oder auch ausschließlich monofunktionelle Monomere enthalten. Gemäß einer besonderen Ausführungsform der Erfindung besteht dementsprechend die Komponente (a) der erfindungsgemäßen Verschlußmassen nur aus monofunktionellen, photopolymerisierbaren Monomeren der in Rede stehenden Art oder aus Mischungen dieser monofunktionellen, photopolymerisierbaren Monomeren mit einem untergeordneten Anteil an mehrfunktionellen, insbesondere bifunktionellen, photopolymerisierbaren Monomeren der in Rede stehenden Art.

Zu den erfindungsgemäß als Komponente (a) der Verschlußmassen einzusetzenden hydrophilen, polaren, photopolymerisierbaren, ethylenisch ungesättigten niedermolekularen Verbindungen gehören unter anderem die N-Vinylverbindungen sowie die α,β-olefinisch ungesättigten Mono- oder Dicarbonsäuren sowie entsprechende Derivate hiervon. Als Beispiel für die N-Vinylmonomeren seien die N-Vinyllactame, insbesondere N-Vinylpyrrolidon und N-Vinylcaprolactam, genannt. Bei den α,β-olefinisch ungesättigten Carbonsäuren kommt insbesondere der Acrylsäure und Methacrylsäure besondere Bedeutung zu. Besonders vorteilhaft als photopolymerisierbare Monomeren sind auch Derivate der α,β-olefinisch ungesättigten Carbonsäuren, insbesondere Derivate der Acryl- oder Methacrylsäure, wie Hydroxyalkyl-(meth)acrylate, (Meth)acrylamid oder Derivate von (Meth)acrylamid. Als Beispiele für die Hydroxyalkyl(meth)acrylate, die vorzugsweise 2 bis etwa 20 C-Atome, und insbesondere 2 bis 8 C-Atome, im Alkylrest enthalten, seien genannt 2-Hydroxyethyl-(meth)acrylat, 2-Hydroxypropyl-(meth)acrylat, 3-Hydroxypropyl-(meth)acrylat, 1,4-Butandiol-mono-(meth)acrylat oder Hexandiol-mono-(meth)acrylat. Geeignet sind auch Mono-(meth)acrylate von Polyalkylenglykolen, z.B. Di-, Tri- oder Tetraethylenglykol-mono-(meth)-acrylat. Als Beispiele für die Derivate des (Meth)-acrylamids, die sich erfindungsgemäß ebenfalls als Monomere eignen, seien N-Methylol-(meth)acrylamid sowie dessen Diether mit Diolen genannt, wie z.B. das Umsetzungsprodukt aus 2 Mol N-Methylol-(meth)acrylamid mit einem Mol Ethylenglykol.

Die Auswahl der als Komponente (a) verwendeten hydrophilen, polaren, photopolymerisierbaren niedermolekularen Verbindungen richtet sich unter anderem nach der Art des als Komponente (b) mitverwendeten polymeren Bindemittels, mit dem die photopolymerisierbaren niedermolekularen Verbindungen verträglich sein sollen, als auch nach den gewünschten Eigenschaften der ausgehärteten Verschlußmasse. Die hydrophilen, polaren, photopolymerisierbaren niedermolekularen Verbindungen können dabei alleine oder auch in Mischung miteinander eingesetzt werden. Beispielsweise ist es möglich, über Art und Menge der eingesetzten Monomeren, bzw. bei Einsatz von Monomer-Gemischen auch über das Mischungsverhältnis der Monomeren untereinander, die mechanischen Eigenschaften der ausgehärteten Verschlußmasse und damit verschlossener Spalte zu variieren und im gewünschten Umfang einzustellen. Die erfindungsgemäßen Verschlußmassen enthalten dabei im allgemeinen 10 bis 90 Gew.%, insbesondere 30 bis 80 Gew.%, bezogen auf die gesamte Verschlußmasse, der hydrophilen, polaren, photopolymerisierbaren niedermolekularen Verbindungen. Über die Menge der photopolymerisierbaren niedermolekularen Verbindungen (a) läßt sich auch die Viskosität der Verschlußmasse einstellen und variieren. Verschlußmassen mit einem sehr hohen Anteil an Komponente (a) sind dabei im allgemeinen besonders dünnflüssig. Üblicherweise werden die etwas höherviskosen, jedoch bei Raumtemperatur noch leicht fließfähigen Verschlußmassen bevorzugt, da dann einerseits das gleichmäßige Verteilen der Verschlußmasse im Spalthohlraum gewährleistet ist und es andererseits für die Abdichtung des Spalthohlraums an den Stirnseiten des Zylinders keiner aufwendigen Vorkehrungen bedarf.

Daneben enthalten die erfindungsgemäßen Verschlußmassen als Komponente (b) mindestens ein polymeres Bindemittel, das mit den photopolymerisierbaren niedermolekularen Verbindungen der Komponente (a) verträglich ist. Das polymere Bindemittel wird dabei so ausgewählt, daß es gegenüber den beim Tiefdruck üblicherweise verwendeten und gebräuchlichen toluol-, benzin-, keton- und/oder esterhaltigen Druckfarben-Lösungsmitteln beständig ist. Eine Klasse von sehr geeigneten polymeren Bindemitteln sind dabei die Styrol/Maleinsäurehalbester-Copolymerisate. Diese Copolymerisate enthalten häufig die Styrol- und Maleinsäurehalbester-Comonomeren im Molverhältnis von etwa 1:1. Es sind aber auch andere Comonomer-Verhältnisse möglich; zudem können die Copolymerisate auch noch andere Comonomeren, wie z.B. Maleinsäureanhydrid und/oder (Meth)-acrylate, einpolymerisiert enthalten. Die Styrol/Maleinsäurehalbester-Copolymerisate haben im allgemeinen einen Erweichungspunkt über 150° C, insbesondere über 180° C und ein mittleres Molekulargewicht etwa im Bereich von 5.000 bis 50.000. Eine weitere Klasse von sehr geeigneten polymeren Bindemitteln für die erfindungsgemäßen Verschlußmassen stellen die linearen synthetischen Polyamide, insbesondere die linearen löslichen Copolyamide, mit wiederkehrenden Amidgruppen in der Molekülhauptkette dar, wie sie beispielsweise als polymere Bindemittel für photopolymerisierbare Aufzeichnungsmaterialien als solche bekannt und unter anderem in der FR-PS 15 20 856 und der DE-A-22 02 357 beschrieben sind. Besonders geeignete Copolyamide sind solche, die durch Mischkondensation eines Gemisches aus einem oder mehreren Lactamen, insbesondere Caprolactam, und mindestens einem Dicarbonsäure/Diamin-Salzhergestellt worden sind, z.B. aus ε-Caprolactam, Hexamethylendiammonium-Adipat und dem 4,4'-Diaminodicyclohexylmethan/Adipinsäure-Salz. Die erfindungsgemäß zum Einsatz gelangenden Polyamide haben vorzugsweise einen K-Wert (nach Fikentscher, Cellulose-Chemie, 13, 58 (1932)) im Bereich von 20 bis 80, insbesondere im Bereich von 30 bis 70.

Vorzugsweise werden als Komponente (b) solche polymeren Bindemittel eingesetzt, die in den als Komponente (a) verwendeten hydrophilen, polaren, photopolymerisierbaren, ethylenisch ungesättigten niedermolekularen Verbindungen löslich sind. Es ist aber auch möglich, solche polymeren Bindemittel als Komponente (b) einzusetzen, die in den photopolymerisierbaren niedermolekularen Verbindungen der Komponente (a) nur dispergierbar sind, solange die photopolymerisierbaren niedermolekularen Verbindungen und die polymeren Bindemittel miteinander verträglich und zu einer homogenen, fließfähigen Mischung verarbeitbar sind. Der Anteil der polymeren Bindemittel (Komponente (b)) an den erfindungsgemäßen Verschlußmassen liegt im allgemeinen im Bereich von 5 bis 65 Gew.%, insbesondere im Bereich von 10 bis 50 Gew.%, bezogen auf die gesamte Verschlußmasse.

Neben den photopolymerisierbaren, niedermolekularen Verbindungen der in Rede stehenden Art sowie den polymeren Bindemitteln, enthalten die erfindungsgemäßen Verschlußmassen als Komponente (c) einen oder mehrere Photopolymerisations-Initiatoren, insbesondere in einer Menge von 0,01 bis 5 Gew.%, vorzugsweise von 0,05 bis 2 Gew.%, bezogen auf die gesamte Verschlußmasse. Erfindungsgemäß kommen hierfür die als Photoinitiatoren für lichthärtbare Massen üblichen und an sich bekannten Verbindungen in Betracht. Hierzu gehören insbesondere Benzoin und Benzoin-Derivate, wie z.B. Benzoinalkylether, insbesondere mit 1 bis 8 C-Atomen im Alkylrest, etwa Benzoinmonomethylether oder Benzoinisopropylether, α-Hydroxymethylbenzoin und dessen Alkylether, wie α -Hydroxymethylbenzoinmethylether, oder α-Methylbenzoin und dessen Ether; Benzil und Benzil-Derivate, insbesondere Benzilmonoketale, wie Benzildimethylketal, Benzilmethylethylketal oder Benzilmethylbenzylketal; die als Photoinitiator wirksamen Acylphosphinverbindungen, wie sie beispielsweise in den DE-OSen 28 30 927, 29 90 994, 30 20 092, 30 34 697, 31 14 314 und 31 33 419 beschrieben sind und für die als Vertreter beispielhaft das 2,4,6-Trimethylbenzoyldiphenylphosphinoxid, der 2,4,6-Trimethylbenzoylphenylphosphinsäureethylester und das 2,4,6-Trimethylbenzoylbis(o-toluyl)-phosphinoxid genannt seien; Derivate des α-Hydroxyacetophenons, wie z.B. 1-Phenyl-2-hydroxy-2-methyl-1-propanon, 1-(p-Isopropylphenyl)-2-hydroxy-2-methyl-1-propanon und 1-Hydroxy-1-benzoyl-cyclohexan; ferner Benzophenon, Michlers Keton, Fluorenon, Anthrachinon, Xanthon, Thioxanthon und Acridon sowie die an sich als Photoinitiatoren bekannten und gebräuchlichen Derivate dieser Verbindungen. Die Photopolymerisationsinitiatoren können allein oder auch in Mischung miteinander in den erfindungsgemäßen Verschlußmassen enthalten sein; sie können auch zusammen mit den für diese Photoinitiatoren an sich bekannten Aktivatoren eingesetzt werden, wobei als Aktivatoren vornehmlich Amin-Verbindungen in Betracht kommen.

Als Zusatz- und/oder Hilfsstoffe, die in den erfindungsgemäßen Verschlußmassen in Mengen von 0 bis 70 Gew.%, insbesondere in Mengen bis zu 50 Gew.%, bezogen auf die Verschlußmasse, enthalten sein können, kommen vor allem thermische Polymerisationsinhibitoren, Stabilisatoren, Antioxidantien, Weichmacher, Farbstoffe, Pigmente und/oder Füllstoffe in Betracht. Zu den thermischen Polymerisationsinhibitoren gehören z.B. Hydrochinon, Hydrochinon-Derivate, 2,6-Di-tert.-butyl-p-kresol, Nitrophenole, N-Nitrosoamine, wie N-Nitrosodiphenylamin, oder die Salze, insbesondere die Alkali- und Aluminiumsalze, des N-Nitrosocyclohexylhydroxylamins. Die Mitverwendung von Füllstoffen, wie beispielsweise Glaspulver, Aluminiumoxid, Siliciumdioxid, Kiesel- und Tonerden, Silikaten etc., hat sich nicht nur deswegen als vorteilhaft erwiesen, weil es hierdurch möglich ist, einen eventuellen Schrumpf bei der Lichthärtung der erfindungsgemäßen Verschlußmassen auszugleichen bzw. zu verringern, sondern es können hierdurch auch die Oberflächeneigenschaften des gefüllten und verschlossenen Spaltes vorteilhaft beeinflußt werden. Pigmente und Farbstoffe können für die visuelle Beobachtung beim Spaltfüllen und die Begutachtung des Spaltverschlusses hilfreich sein. Durch den Zusatz von Weichmachern können die Viskosität und das Fließverhalten der erfindungsgemäßen lichthärtbaren Verschlußmassen variiert und gesteuert, als auch wichtige mechanische Eigenschaften der ausgehärteten Spaltfüllung, wie z.B. Zähigkeit und Elastizität, beeinflußt werden. Als Weichmacher kommen hierbei insbesondere niedermolekulare Verbindungen, wie z.B. die bekannten Phthalsäureester, oder hydroxylgruppenhaltige Verbindungen, wie z.B. Glycerin, Ethylenglykol und dergleichen, in Betracht, die mit den Komponenten (a) und (b) der erfindungsgemäßen Verschlußmassen verträglich sind.

Als ein Beispiel für sehr geeignete erfindungsgemäße Verschlußmassen seien solche homogenen photopolymerisierbaren Gemische genannt, die neben Photoinitiatoren sowie gegebenenfalls Zusatz- und/oder Hilfsstoffen der oben genannten Art als polymeres Bindemittel (Komponente (b)) ein Styrol/Maleinsäurehalbester-Copolymerisat sowie als photopolymerisierbare, ethylenisch ungesättigte niedermolekulare Verbindung (Komponente (a)) Hydroxyalkylacrylate und/oder Hydroxyalkylmethacrylate in den weiter oben für diese Komponenten angegebenen Mengenverhältnissen enthalten. Diese sehr vorteilhaften erfindungsgemäßen Verschlußmassen mit Styrol/Maleinsäurehalbester-Copolymerisaten als polymerem Bindemittel enthalten als Komponente (a) insbesondere eine Mischung aus Hydroxyalkylacrylaten und Hydroxyalkylmethacrylaten, beispielsweise eine Mischung aus 2-Hydroxyethyl-acrylat und 2-Hydroxyethyl-methacrylat.

Als weiteres Beispiel für sehr günstige erfindungsgemäße Verschlußmassen, mit denen ebenfalls sehr vorteilhafte Ergebnisse erzielt wurden, sind solche homogenen Gemische zu nennen, die neben Photopolymerisiationsinitiatoren sowie gegebenenfalls Zusatz- und/oder Hilfsstoffen der vorstehend genannten Art als polymeres Bindemittel ein lösliches Copolyamid und als photopolymerisierbare, ethylenisch ungesättigte niedermolekulare Verbindung (Meth)acrylsäure und/oder Hydroxyalkyl-(meth)acrylate enthalten. Als Copolyamide kommen dabei insbesondere die weiter oben angesprochenen Mischpolyamide in Betracht, die durch Mischkondensation eines Gemisches aus einem oder mehreren Lactamen, insbesondere Caprolactam, und mindestens einem Dicarbonsäure/Diamin-Salz hergestellt worden sind; als photopolymerisierbare, niedermolekulare Verbindung wird vorteilhafterweise eine Mischung aus (Meth)acrylsäure und Hydroxyalkyl-(meth)acrylaten, beispielsweise aus Acrylsäure und 2-Hydroxyethyl-methacrylat, eingesetzt, wobei der Anteil an Hydroxyalkyl(meth)-acrylat in diesen Monomeren-Mischungen im allgemeinen überwiegt und beispielsweise im Bereich von etwa 50 bis 80 Gew.%, bezogen auf das Monomeren-Gemisch liegt. Auch im Fall dieser Verschlußmassen-Mischungen liegen die Mengen, in denen die einzelnen Mischungskomponenten in der Verschlußmasse enthalten sind, vorzugsweise in den weiter oben für diese Komponenten allgemein angegebenen Bereichen.

Allgemein hat sich gezeigt, daß in den Fällen, in denen eine sehr gute Haftung der ausgehärteten Verschlußmassen zu den Tiefdruckplatten angestrebt wird, solche Verschlußmassen besonders günstig sind, bei denen entweder die photopolymerisierbaren, ethylenisch ungesättigten niedermolekularen Verbindungen der Komponente (a) oder die als Komponente (b) eingesetzten polymeren Bindemittel freie Carboxylgruppen enthalten. In den bevorzugten Mischungen liegt der Anteil an freien COOH-Gruppen in der Komponente (a) und/oder der Komponente (b) im Bereich von etwa 0,5 bis 10 Gew.%, bezogen auf die Summe der Komponenten (a) + (b), wobei das Gewicht der freien Carboxylgruppen mit 45 angesetzt ist.

Die einzelnen Komponenten der erfindungsgemäßen Verschlußmassen, insbesondere die Komponente (a) und (b), werden so aufeinander abgestimmt, daß das resultierende homogene Gemisch bei Raumtemperatur fließfähig ist. Bei Einsatz von bei Raumtemperatur festen polymeren Bindemitteln, ist dementsprechend der Anteil an photopolymerisierbaren niedermolekularen Verbindungen entsprechend hoch zu wählen, daß eine fließfähige homogene Lösung oder Dispersion des polymeren Bindemittels in den Monomeren resultiert.

Üblicherweise sind die erfindungsgemäßen Verschlußmassen lösungsmittelfrei, d.h. frei von bei Raumtemperatur leicht flüchtigen, flüssigen nicht polymerisierbaren Verbindungen. Es hat sich jedoch gezeigt, daß ein geringer Anteil, beispielsweise bis zu etwa 10 Gew.%, bezogen auf die Verschlußmasse, an solchen bei Raumtemperatur leicht flüchtigen, flüssigen nicht polymerisierbaren Verbindungen in den Verschlußmassen den Spaltverschluß nicht nachteilig beeinflußt und diese nach Verschließen des Spaltes und Aushärtung der Verschlußmassen ohne Beeinträchtigung des Spaltverschlusses aus dem gehärteten Füllmaterial ausdiffundieren können. Als lösungsmittelfrei werden daher im Rahmen dieser Erfindung solche Verschlußmassen bezeichnet, die im wesentlichen frei von Lösungsmitteln sind, d.h. im allgemeinen weniger als etwa 10 Gew.%, vorzugsweise aber weniger als 2 Gew.%, an bei Raumtemperatur leicht flüchtigen, flüssigen nicht polymerisierbaren Verbindungen enthalten. Bevorzugt sind die Verschlußmassen, die kein Lösungsmittel enthalten. Als sehr günstig haben sich solche lösungsmittelfreien Verschlußmassen erwiesen, bei denen die photopolymerisiebaren niedermolekularen Verbindungen der Komponente (a) mit den polymeren Bindemittel der Komponente (b) eine homogene Lösung bilden.

Die erfindungsgemäßen lichthärtbaren Verschlußmassen eignen sich für den Spaltverschluß bei allen Tiefdruckplatten, die auf den Formzylinder einer Bogen- oder Rollen-Rotationstiefdruckmaschine aufgespannt werden können, wie z.B. den konventionellen Tiefdruckplatten aus Metall mit Ballard-Haut. Insbesondere vorteilhaft sind die erfindungsgemäßen Verschlußmassen jedoch für den Spaltverschluß bei auf Formzylinder aufgespannten Tiefdruckplatten mit Kunststoff-Druckschichten. Bei den Tiefdruckplatten mit Kunststoff-Druckschichten ist auf einem geeigneten Druckschicht-Träger eine Kunststoff-Schicht aufgebracht, in die die farbaufnehmenden Vertiefungen (Näpfchen) eingebracht sind. Diese Näpfchen können dabei in der Kunststoff-Druckschicht durch mechanische Gravur oder Laser-Gravur ausgebildet worden sein (vgl. z.B. DE-A-27 52 500 oder DE-A-30 28 098) oder im Fall von photopolymeren Tiefdruckplatten durch bildmäßiges Belichten und Entwickeln eines geeigneten lichtempfindlichen Aufzeichnungsmaterials in die Kunststoff-Druckschicht eingebracht worden sein (vgl. DE-A-20 61 287, DE-A-31 28 949 und DE-A-31 28 951). Die erfindungsgemäße lichthärtbare Verschlußmasse eignet sich sehr vorteilhaft bei Tiefdruckwickelplatten für das Verschließen des Spaltes, wie er sich beim Aufspannen dieser Wikkelplatten auf einen Formzylinder zwischen den Enden der Tiefdruckplatte ausbildet. Sie ist aber gleichermaßen geeignet für das Verschließen der Spalte, die sich beim Aufbringen von mehreren Tiefdruckplatten hintereinander und/oder nebeneinander auf einen einzigen Formzylinder, beispielsweise mittels hierfür geeigneter und an sich bekannter Sattelkonstruktionen, zwischen den Endbereichen und/oder Seitenkanten der einzelnen Tiefdruckplatten ergeben. Ein besonderer Vorteil der erfindungsgemäßen lichthärtbaren Verschlußmassen ist auch darin zu sehen, daß hiermit breite und tiefe Spalte, die sich beim Aufspannen von Tiefdruckplatten auf einen Formzylinder zwischen den aneinanderstoßenden Randbereichen der Tiefdruckplatte ergeben können, problemlos und sehr dauerhaft verschlossen werden können. Unter Tiefdruckplatten werden dabei im Rahmen dieser Erfindung gleichermaßen die fertigen Tiefdruckplatten verstanden, in denen bereits die farbführenden Vertiefungen eingebracht sind, als auch die Tiefdruckplatten-Rohlinge, in denen die Näpfchen noch nicht ausgebildet sind. D.h., daß es gleichwohl möglich ist, eine fertige Tiefdruckplatte auf den Formzylinder aufzuspannen und dann die sich ergebenden Spalte mit der erfindungsgemäßen Verschlußmasse auszufüllen, oder aber auch zunächst Tiefdruckplatten-Rohlinge auf die Formzylinder aufzuspannen, anschließend die sich hierbei ergebenden Spalte mit der erfindungsgemäßen Verschlußmasse auszufüllen und erst danach die Näpfchen in die Druckschicht der Druckplatten einzubringen. Das Aufspannen der Tiefdruckplatten auf die Formzylinder ist als solches bekannt und erfolgt beispielsweise über Permanent-Magnete oder mechanische Mittel zum Befestigen und Spannen der Druckplatten. Im allgemeinen werden hierfür solche Formzylinder verwendet, bei denen die Tiefdruckplatten durch Einhängen und Verankern mindestens eines, vorzugsweise aber beider hierfür umgekanteter Plattenenden in eine Einhängenut bzw. einen Zylinderkanal befestigt und gespannt werden.

Die erfindungsgemäße Verschlußmasse kann zum Verschließen der Spalte, die sich beim Aufspannen der Tiefdruckplatten auf die Formzylinder ergeben, nach beliebigen Methoden oder Verfahren in den Spalt eingebracht werden, sofern hierbei eine gleichmäßige und vollständige Füllung des Spalthohlraums gewährleistet ist. Beispielsweise kann die erfindungsgemäße Verschlußmasse in sehr einfacher Weise mittels einer Pipette, Spritze oder dergleichen in den Spalthohlraum injiziert werden. Etwaiges überschüssiges, übertretendes Verschlußmaterial kann leicht und schnell von der Tiefdruckdruckplatte abgewischt werden. Es ist selbstverständlich auch möglich, für dieses Injizieren der Verschlußmasse in den Spalthohlraum geeignete Einspritzvorrichtungen mit angebaute Glättrakel zu verwenden, wie sie bisher für den Spaltverschluß mit anderen Verschlußmaterialien bereits vorgeschlagen wurden. Ebenso ist es möglich, zum Verschließen des Spaltes die erfindungsgemäße Verschlußmasse in den Spalthohlraum nach der Methode einzubringen, wie sie beispielsweise in der DE-A-25 45 618 beschrieben ist. Hierbei wird der Spalt mit den angrenzenden Oberflächen der Tiefdruckplatte durch einen Formbalken mit einer gekrümmten Oberfläche, dessen Krümmung exakt auf die Krümmung der Manteloberfläche des Tiefdruckzylinders zugearbeitet worden ist, bündig abgedeckt und in den so entstehenden Spalthohlraum die lichthärtbare Verschlußmasse eingespritzt.

Ein besonders vorteilhaftes Verfahren zum Verschließen der Spalte, welches unter Einsatz der erfindungsgemäßen Verschlußmassen einfach durchführbar ist und welches zu Spaltverschlüssen mit guten Oberflächen führt, die nicht mehr nachbearbeitet zu werden brauchen, besteht darin, daß man die Spalte, die sich zwischen den End- und/oder Randbereichen der aufgespannten Tiefdruckplatten ergeben, mit den angrenzenden Oberflächen der Tiefdruckplatte dadurch bündig abdeckt, daß man ein biegsames Flächenstück, wie z.B. ein Folienstück oder vorzugsweise eine feste, elastischbiegbare Platte, über den Spalt legt und das Flächenstück an die Oberfläche der Tiefdruckplatte andrückt. In den dadurch entstehenden Spalthohlraum kann die erfindungsgemäße lichthärtbare Verschlußmasse ohne Schwierigkeiten eingespritzt und anschließend gehärtet werden. Vorzugsweise wird bei diesem Verfahren zum Abdecken des Spaltes ein transparentes Flächenstück verwendet, so daß die Härtung der eingefüllten Verschlußmasse noch bei angedrücktem Flächenstück erfolgen kann und dieses erst nach Aushärtung der Verschlußmasse entfernt wird.

Nach dem Füllen der Spalte wird die erfindungsgemäße Verschlußmasse zur Aushärtung mit aktinischem Licht bestrahlt. Hierzu können alle bekannten Lichtquellen, die Licht in dem für die Verschlußmassen aktinischen Wellenlängenbereich, insbesondere in einem Wellenlängenbereich von etwa 250 bis 450 nm, auszusenden vermögen, verwendet werden, wie z.B. Kohlebogenlampen, aktinische oder superaktinische Leuchtstoffröhren, Quecksilbernieder-, -mittel, oder -hochdruckstrahler, die gegebenenfalls dotiert sein können Xenonlampen oder auch Laser mit hohem UV-Anteil.

Dieses vorteilhafte und für den Einsatz der erfindungsgemäßen Verschlußmassen besonders geeignete Verfahren zum Verschließen der Spalte sei im folgenden anhand der in der Zeichnung dargestellten Ausführungsformen näher erläutert. Dabei zeigen:

Figur 1 einen Formzylinder ausschnittsweise im Bereich der Nut zum Einhängen der Enden einer Tiefdruckplatte mit einem die Enden überdeckenden Flächenstück und aufgesetzten Druckstück im Querschnitt

Figur 2 Formzylinder wie Fig. 1, jedoch im Längsschnitt

Figur 3 Formzylinder wie in Figur 1, wobei jedoch das Druckstück im wesentlichen nur aus zwei Andrückelementen besteht und im Spalthohlraum ein im Querschnitt runder Hohlkörper angeordnet ist.

Figur 4 Formzylinder wie Figur 1 mit einer im Druckstück angeordneten Strahlungsquelle.

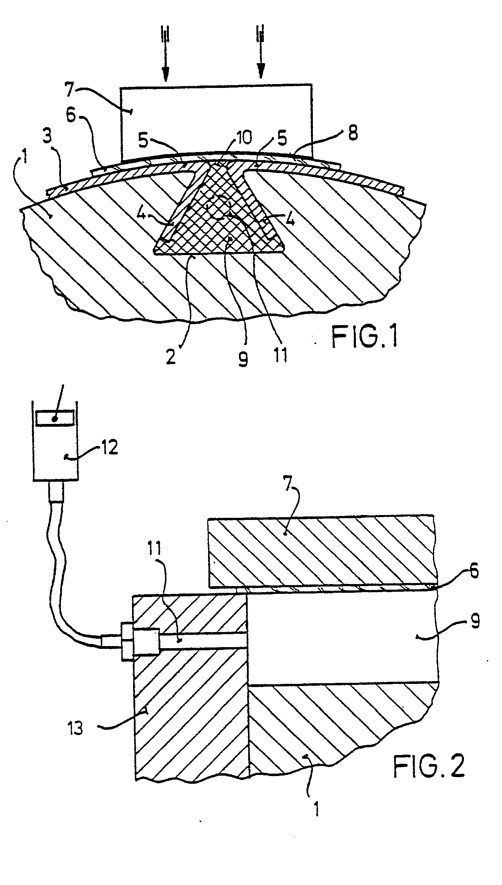

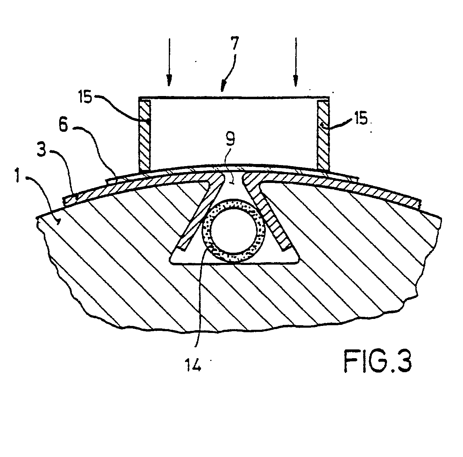

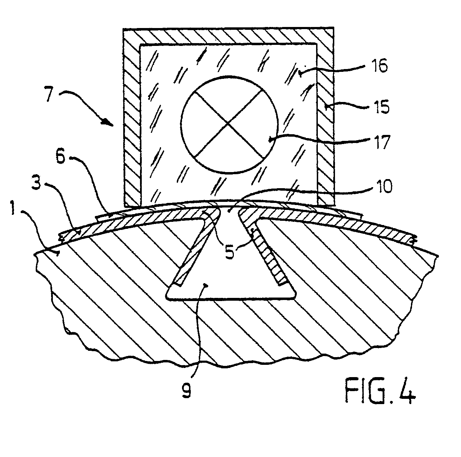

Der Formzylinder 1 einer Bogen- oder Rollen-Rotationstiefdruckmaschine ist oberflächenseitig, wie in Figur 1 zu sehen, mit einer entlang der Formzylinderachse verlaufenden und von der Zylinderoberfläche zum Zylinderzentrum hin sich aufweitenden Nut 2 versehen, in die eine auf den Formzylinder 1 aufgespannte Tiefdruckwickelplatte 3 mit - im dargestellten Beispiel beiden - umgekanteten Enden 4 unter spitzem Winkel eingehängt ist. Zum Abdecken des Spaltes 10 wird auf die Oberfläche der Tiefdruckplatte 3 ein die beiden Endabschnitte 5 der Tiefdruckwickelplatte 3 übergreifendes Flächenstück 6 aufgelegt. Das Flächenstück 6 ist insbesondere eine transparente, flexible Kunststoff-Folie oder elastisch-biegbare Kunststoff-Platte, die vorzugsweise für das für die Spalthärtung verwendete aktinische Licht transparent ist, und soll sich von der ausgehärteten Spaltfüllung leicht abziehen lassen. Das Flächenstück 6 kann beispielsweise aus Polyestern, z.B. Polyethylenterephthalat oder Polybutylenterephthalat, Polyamiden, Polystyrol, Polyethylen, Polypropylen, Polyvinylchlorid sowie insbesondere aus Polyacrylaten oder Polymethacrylaten bestehen. Das Flächenstück 6 wird durch ein zufahrbares Druckstuck 7 gestützt. Die Stützfläche 8 des Druckstücks 7 kann dabei die gleiche Krümmung wie die Oberfläche der Endabschnitte 5 der Tiefdruckplatte 3 aufweisen, kann aber auch davon abweichen. Das Druckstück 7 kann insbesondere auch, wie in Figur 3 dargestellt ist, nur aus zwei parallelen auf- und abbeweglichen Andrückelementen 15 gebildet werden, die beidseits der Enden der Tiefdruckplatte angeordnet sind und sich über die gesamte Zylinderbreite erstrecken. Die Andrückelemente 15 können beispielsweise durch die Schenkel eines im Querschnitt U-förmigen, zum Formzylinder 1 offenen Trägers, wie er in Figur 4 dargestellt ist, gebildet werden; sie können aber auch, wie aus Figur 3 ersichtlich, in Form von getrennten leistenförmigen Elementen ausgebildet sein, die vorteilhaft durch eine Verstrebung miteinander verbunden sind.

Der durch das Abdecken des Spaltes 10 entstandene Spalthohlraum 9 wird von der Stirnseite des Formzylinders 1 her (Figur 2) über eine oder mehrere in dessen Lagerwanne 13 angeordnete Zuführungen 11 mit der erfindungsgemäßen lichthärtbaren Verschlußmasse gefüllt. Hierzu ist eine Dosiervorrichtung 12, beispielsweise ein Dosierkolben, vorgesehen. Um ein Eindringen der Verschlußmasse in das Innere des Formzylinders insbesondere in eventuelle Spannvorrichtungen und -elemente, zu verhindern, ist der Spalthohlraum 9 nach radial innen, d.h. zum Zylinderzentrum hin, geschlossen. Der Abschluß des Spalthohlraums 9 nach radial innen zum Zylinderzentrum hin kann durch rein konstruktive Merkmale des Formzylinders 1 bewerkstelligt und gewährleistet werden. Es ist jedoch auch möglich, zur Abdichtung des Spalthohlraums 9 ein sich über die gesamte Länge des Nuthohlraums erstreckendes Dichtelement 14 (Figur 3) vorzusehen. Dieses Dichtelement 14 kann kompakt oder auch, wie in der Zeichnung dargestellt, ein Hohlkörper, z.B. ein Schlauch aus Silikon-Gummi, sein. Kommen als Dichtelement 14 Hohlkörper, vorzugsweise mit runden Querschnitten, zur Anwendung, können diese über eine weitere (in der Zeichnung nicht dargestellte) Zuführung an eine Druckmittelquelle angeschlossen und dadurch aufblähbar sein. Hierdurch kann sowohl eine sichere und zuverlässige Abdichtung erzielt, als auch ein eventueller Schrumpf der ausgehärteten Verschlußmasse, der - wie sich überraschenderweise gezeigt hat - bei Einsatz der erfindungsgemäßen Verschlußmassen nicht oder nur in unwesentlichem Umfang auftritt, ausgeglichen werden. Ist für den Hohlkörper 14 neben einer Zu- auch eine Abführung vorgesehen, so kann dieser in einen unter Druck stehenden Heiz-oder Kühlmittelkreislauf geschaltet werden, um beispielsweise das Fließverhalten der lichthärtbaren Verschlußmasse beim Füllen des Spalthohlraums steuern zu können.

Nach dem Füllen des Spalthohlraums kann das Druckstück 7 zurückgezogen, das Flächenstück 6 entfernt und anschließend die in dem Spalthohlraum befindliche Verschlußmasse durch Bestrahlen mit aktinischem Licht gehärtet werden. Es hat sich jedoch als vorteilhafter erwiesen, das Flächenstück 6 erst nach der Aushärtung der Verschlußmasse zu entfernen. In diesem Fall wird ein für das aktinische Licht transparentes Flächenstück verwendet und der mit der erfindungsgemäßen Verschlußmasse ausgefüllte Spalthohlraum 9 durch das Flächenstück 6 hindurch bei niedergefahrenem, angedrücktem Druckstück 7 mit aktinischem Licht bestraht.

Dies kann beispielsweise derart geschehen daß, wie in Figur 4 dargestellt, das Druckstück 7 aus einem im Querschnitt U-förmigen, zum Formzylinder 1 offenen Träger besteht, dessen Schenkel 15 das Flächenstück 6 an die Oberfläche der Tiefdruckplatte 3 andrücken. Im Hohlraum 16 des offenen Trägers ist eine Strahlungsquelle 17 für aktinisches Licht angeordnet. Dabei kann der Hohlraum 16 mit einem für das aktinische Licht durchlässigen Material, z.B. einem Gießharz ausgefüllt sein. Somit ist es möglich, in einem Arbeitsgang mittels des Druckstücks 7 das elastische flexible Flächenelement 6 an die Oberfläche der aufgespannten Tiefdruckwickelplatte 3 anzudrücken, in den so entstehenden, zur Zylinderoberfläche hin bündig abgeschlossenen Spalthohlraum 9 dann die erfindungsgemäße lichthärtbare Verschlußmasse einzufüllen und anschließend direkt die Verschlußmasse durch Bestrahlen mit aktinischem Licht auszuhärten, während durch das Druckstück 7 das elastische flexible Flächenelement 6 nach wie vor an die Oberfläche der Tiefdruckwickelplatte 3 angedrückt wird. Ähnlich einfach und elegant läßt sich selbstverständlich auch arbeiten, wenn das Druckstück 7, wie in Figur 3 wiedergegeben, im wesentlichen nur aus 2 getrennten Andrückelementen 15 gebildet wird, wobei dann die Bestrahlung mit dem aktinischen Licht leicht durch Einbringen einer Strahlungsquelle zwischen die beiden Andrückelemente 15 erfolgen kann.

Nach dem Aushärten der Verschlußmasse wird das Druckstück 7 zurückgezogen und das Flächenstück 6 entfernt. Sofern es sich für eine leichte Entfernung des Flächenstücks 6 von der ausgehärteten Verschlußmasse für notwendig erweisen sollte, kann das Flächenstück 6 oberflächlich mit einem ahäsiven Mittel behandelt, z.B. silikonisiert sein. Man erhält nach dem beschriebenen Verfahren einen einwandfreien Spaltverschluß der die Oberflächen der beiden Endabschnitte 5 der Tiefdruckplatte 3 bündig und fest verschließt, nicht mehr nachbearbeitet zu werden braucht und einen störungsfreien Druck auch in der Rollenrotation ermögicht.

Die Erfindung wird durch die nachfolgenden Beispiele näher erläutert.

Beispiel 1

21 g eines Styrol-Maleinsäurehalbester-Copolymerisats und 0,7 g Benzildimethylketal wurden in 50 g Hydroxyethylacrylat gelöst. Die bei Raumtemperatur honigartige Masse wurde in den Spalthohlraum eingespritzt, der sich beim bündigen Abdekken der Endabschnitte einer auf einen Formzylinder aufgespannten Tiefdruckwickelplatte mit Kunststoff-Druckschicht mit einer Polyesterfolie ergab. Die Spaltfüllung wurde anschließend durch Bestrahlen mit einer UV-Leuchtstoffröhre gehärtet und danach die Polyesterfolie entfernt. Der so vorbereitete Zylinder wurde in einer Albertina-Tiefdruckmaschine gedruckt. Der Spaltverschluß führte beim Druck zu keinerlei Störungen; er war nach über 50.000 Drucken noch einwandfrei.

Beispiel 2

50 g eines Copolyamids und 4,5 g Benzildimethylketal wurden in 100 g Acrylsäure gelöst. In diese Lösung wurden 100 g Hydroxyethylacrylat, 100 g Hydroxyethylmethacrylat und 100 g Glycerin eingerührt. Mit dieser Masse wurde, wie in Beispiel 1 beschrieben, der Spalt zwischen den Enden einer auf einen Formzylinder aufgespannten Tiefdruckwickelplatte mit Kunststoff-Druckschicht verschlossen. Das Druckverhalten des so hergestellten Zylinders entsprach dem von Beispiel 1.

Patentansprüche

1. Lichthärtbare Verschlußmasse zum Verschließen der Spalte, die sich beim Aufspannen von Tiefdruckplatten auf Formzylinder zwischen den End- oder Randbereichen der Tiefdruckplatten ergeben, dadurch gekennzeichnet, daß die Verschlußmasse aus einem homogenen, bei Raumtemperatur fließfähigen, weniger als 10 Gew.% an bei Raumtemperatur leicht flüchtigen, flüssigen, nicht polymerisierbaren Verbindungen enthaltenden, photopolymerisierbaren Gemisch besteht von

(a) 10 bis 90 Gew.% mindestens einer hydrophilen, polaren, photopolymerisierbaren, ethylenisch ungesättigten niedermolekularen Verbindung aus der Gruppe N-Vinylmonomere, (Meth)acrylsäure, Hydroxyalkyl-(meth)acrylate, (Meth)acrylamid und/oder Derivate von (Meth)acrylamid,

(b) 5 bis 65 Gew.% mindestens eines gegenüber toluol-, benzin-, keton- und/oder esterhaltigen Lösungsmitteln beständigen, polymeren Bindemittels, das mit den photopolymerisierbaren niedermolekularen Verbindungen der Komponente (a) verträglich ist,

(c) 0,01 bis 10 Gew.% mindestens eines Photopolymerisationsinitiators sowie

(d) 0 bis 70 Gew.% an weiteren Zusatz- und/oder Hilfsstoffen, mit der Maßgabe, daß als polymeres Bindemittel (b) ein Styrol/Maleinsäurehalbester-Copolymerisat oder ein lineares, synthetisches lösliches Copolyamid, das durch Mischkondensation eines Gemisches aus einem oder mehreren Lactamen mit mindestens einem Dicarbonsäure/Diamin-Salz hergestellt worden ist, eingesetzt wird.

2. Verschlußmasse nach Anspruch 1, dadurch gekennzeichnet, daß als Komponente (a) ausschließlich monofunktionelle Monomere mit nur einer photopolymerisierbaren Doppelbindung oder Mischungen dieser monofunktionellen Monomeren mit einem untergeordneten Anteil an mehrfach ungesättigten Monomeren enthalten sind.

3. Verschlußmasse nach Anspruch 1 oder 2, dadurch gekennzeichnet, daß als photopolymerisierbare niedermolekulare Verbindungen Hydroxyalkylacrylate und/oder Hydroxyalkylmethacrylate und als polymeres Bindemittel ein Styrol/Maleinsäurehalbester-Copolymerisat enthalten ist.

4. Verschlußmasse nach Anspruch 1 oder 2, dadurch gekennzeichnet, daß als photopolymerisierbare niedermolekulare Verbindung eine Mischung aus (Meth)acrylsäure und Hydroxyalkyl(meth)acrylaten und als polymeres Bindemittel ein lineares, synthetisches, lösliches Copolyamid enthalten ist.

5. Verschlußmasse nach einem der Ansprüche 1 bis 4, dadurch gekennzeichnet, daß die Komponente (a) und/oder Komponente (b) freie Carboxylgruppen enthält.

6. Verschlußmasse nach einem der Ansprüche 1 bis 5, dadurch gekennzeichnet, daß als Komponente (d) Füllstoffe enthalten sein können.

## Claims

1. A photocurable filling compound for closing the gaps which result between the end or edge regions of gravure printing plates when the latter are clamped on plate cylinders, wherein the filling compound consists of a homogeneous, photopolymerizable mixture which is capable of flow at room temperature, contains less than 10% by weight of liquid, nonpolymerizable compounds readily volatile at room temperature and comprises
   (a) from 10 to 90% by weight of one or more hydrophilic, polar, photopolymerizable, ethylenically unsaturated, low molecular weight compounds from the group consisting of N-vinyl monomers, (meth)acrylic acid, hydroxyalkyl (meth)acrylates, (meth)-acrylamide and/or derivatives of (meth)-acrylamide,
   (b) from 5 to 65% by weight of one or more polymeric binders which are resistant to toluene-containing, gasoline-containing, ketone-containing and/or ester-containing solvents and are compatible with the photopolymerizable low molecular weight compounds of component (a),
(c) from 0.01 to 10% by weight of one or more photopolymerization initiators and
(d) from 0 to 70% by weight of further additives and/or assistants, with the proviso that the polymeric binder (b) used is a styrene/maleic half ester copolymer or a linear, synthetic soluble copolyamide which has been prepared by co-condensation of a mixture of one or more lactams with one or more dicarboxylic acid/diamine salts.

2. A filling compound as claimed in claim 1, wherein exclusively monofunctional monomers having only one photopolymerizable double bond, or a mixture of these monofunctional monomers with a minor amount of polyunsaturated monomers, are present as component (a).

3. A filling compound as claimed in claim 1 or 2, wherein hydroxyalkyl acrylates and/or hydroxyalkyl methacrylates are present as photopolymerizable low molecular weight compounds, and a styrene/maleic half ester copolymer is present as the polymeric binder.

4. A filling compound as claimed in claim 1 or 2, wherein a mixture of (meth)acrylic acid and hydroxyalkyl (meth)acrylates is present as the photopolymerizable low molecular weight compounds, and a linear, synthetic, soluble copolyamide is present as the polymeric binder.

5. A filling compound as claimed in any of claims 1 to 4, wherein component (a) and/or component (b) contain free carboxyl groups.

6. A filling compound as claimed in any of claims 1 to 5, wherein fillers may be present as component (d).

## Revendications

1. Masse de scellement durcissable à la lumière, pour obturer l'interstice résultant du serrage de plaques d'impression en taille douce sur un cylindre de formage, entre les zones d'extrémité ou de bordure des plaques d'impression en taille douce, caractérisée en ce que la masse de scellement se compose d'un mélange photopolymérisable homogène, fluide à la température ambiante, contenant moins de 10 % en poids de combinaisons non polymérisables, facilement volatiles, fluides, à la température ambiante, mélange composé de

a) 10 à 90 % en poids d'au moins une combinaison à bas poids moléculaire, éthyléniquement insaturée, hydrophile, polaire, photopolymérisable, provenant du groupe des N-vinylmonomère, acide (méth)acrylique, hydroxyalkyl (méth)acrylate, (méth)acrylamide et/ou des dérivés du (méth)acrylamide,

b) de 5 à 65 % en poids d'au moins un liant polymère, résistant aux solvants à base de toluène, benzène, cétone et/ou contenant des esters, qui est compatible avec les combinaisons à bas poids moléculaire, photopolymérisables du composant (a),

c) de 0,01 à 10 % en poids d'au moins un initiateur de photopolymérisation, ainsi que

d) de 0 à 70 % en poids d'autres substances additionnelles ou auxiliaires,

avec l'indication que l'on utilise comme liant polymère b) un copolymérisat styrène/semi-ester d'acide maléique ou un copolyamide soluble linéaire, synthétique, ayant été préparé par co-condensation d'un mélange composé d'un ou de plusieurs lactames, avec au moins un sel d'acide bicarbonique/diamine.

2. Masse de scellement selon la revendication 1, caractérisée en ce que les composants (a) contenus sont exclusivement des monomères monofonctionnels, à une seule double liaison photopolymérisable, ou des mélanges de ces monomères monofonctionnels, avec une proportion d'ordre inférieur en monomères plusieurs fois insaturés.

3. Masse de scellement selon la revendication 1 ou 2, caractérisée en ce que les combinaisons à bas poids moléculaire, photopolymérisables, contenues sont des hydroxyalkylacrylates et/ou des hydroxyalkylméthacrylates et le liant polymère contenu est un copolymérisat styrène/semi-ester d'acide maléique.

4. Masse de scellement selon la revendication 1 ou 2, caractérisée en ce que la combinaison à bas poids moléculaire, photopolymérisable, contenue est un mélange composé d'acide (méth)acrylique et d'hydroxyalkyl (méth)acrylates, et le liant polymère est un copolyamide soluble, linéaire, synthétique.

5. Masse de scellement selon l'une des revendications 1 à 4, caractérisée en ce que le composant (a) et/ou le composant (b) contiennent des groupes carboxyl libres.

6. Masse de scellement selon l'une des revendications 1 à 5, caractérisée en ce que des matières de remplissage peuvent être contenues à titre de composant (d).

FIG.1

FIG.2

FIG.3

FIG.4